# EUROPÄISCHE PATENTSCHRIFT

(11) **EP 3 305 578 B1**
(45) Veröffentlichungstag und Bekanntmachung des Hinweises auf die Patenterteilung: **08.04.2020**
(21) Anmeldenummer: 17192110.9
(22) Anmeldetag: 20.09.2017
(51) Int. Cl.: B60L 3/00, B60L 3/12, B60L 5/39

(54) **STROMABNEHMER FÜR EIN SCHIENENFAHRZEUG**
CURRENT COLLECTOR FOR A RAIL VEHICLE
COLLECTEUR DE COURANT POUR UN VÉHICULE SUR RAIL

(30) Priorität: 04.10.2016 DE 102016118735
(43) Veröffentlichungstag der Anmeldung: 11.04.2018
(73) Patentinhaber: Stemmann-Technik GmbH, 48465 Schüttorf (DE)
(72) Erfinder: Oldenburg, Alexander, 48465 Schüttorf (DE); Kues, Hendrik, 49808 Lingen (DE)
(74) Vertreter: Griepenstroh, Jörg

(56) Entgegenhaltungen:
- WO-A1-2015/110325
- WO-A2-2014/102508
- DE-A1-102004 001 799
- DE-B4-102009 047 757
- GB-A- 2 420 539
- JP-A- S5 546 805

## Beschreibung

Die Erfindung betrifft einen Stromabnehmer für ein Schienenfahrzeug gemäß den Merkmalen im Oberbegriff des Patentanspruchs 1.

Zum Stand der Technik sind Dritte-Schiene-Stromabnehmer bekannt, bei denen ein schwenkbeweglich gelagerter Schwingarm mit einem Schleifschuh unter Einfluss einer Federkraft gegen eine ortsfeste dritte Schiene gedrückt wird, um sie während der Fahrt des Schienenfahrzeugs zu bestreichen (EP 1 586 480 A2). Die Anmelderin liefert Dritte-Schiene-Stromabnehmer mit Sollbruchstellen nahe des Schleifschuhs. Wenn der Schleifschuh auf ein Hindernis trifft, bricht dieser an der Sollbruchstelle ab. Dadurch werden weitere Komponenten des Stromabnehmers und das Schienenfahrzeug geschützt. Ein Schienenfahrzeug besitzt in der Regel mehrere derartige Stromabnehmer, so dass bei einem Verlust eines einzigen Schleifschuhs nicht zwangsläufig die gesamte Energieversorgung unterbrochen ist, allerdings werden die verbleibenden, intakten Stromabnehmer stärker belastet. Der Führer des Schienenfahrzeugs bemerkt diesen Ausfall unter Umständen gar nicht, so dass bis zur nächsten visuellen Kontrolle der Stromabnehmer und die weiteren Stromabnehmer einem erhöhten Verschleiß ausgesetzt sind.

Aus der GB 2 420 539 A ist ein Stromabnehmer für ein Schienenfahrzeug bekannt, welcher eine Sollbruchstelle besitzt, die über einen pneumatischen Kreis überwacht wird.

Die WO 2015/110325 A1 offenbart eine Überwachungseinrichtung für Stromabnehmer, wobei entlang von Verbindungselementen zumindest ein mit einer Detektoreinheit verbundener Bruchsensor in der Weise verläuft, dass bei einer Beschädigung eines Verbindungselementes der Zustand des Bruchsensors in der Weise verändert wird, dass mittels Detektoreinheit die Beschädigung feststellbar ist und an ein mit der Detektoreinheit verbundenes Fahrerinformationssystem übermittelbar ist. Dies dient zur Überwachung der Stromabnehmer. Es wird als vorteilhaft beschrieben, hierfür einen Draht vorzusehen. Der Draht wird bevorzugt als geschlossener Stromkreis ausgeführt. Lichtwellenleiter kommen ebenso in Frage.

Es ist durch die DE 10 2004 001 799 A1 bekannt Verschleißzustände an Schleifkörpern zu signalisieren. Vorstufen eines Totalausfalles können mittels Überwachungssystemen bestimmt werden. Hierzu besitzt der Schleifkörper trägerseitig eine Nut, in der ein Druck aufrechterhalten wird. Bei einem Druckausfall wird der Schleifkörper eventuell außer Betrieb genommen und der Pantograph abgesenkt. Es ist möglich, Sacklöcher vorzusehen und durch Verwendung von Fotodioden oder Kameras die Größe des einfallenden Lichtquerschnittes zu erfassen, was ein Maß für den Verschleißzustand der Schleifleisten ist, weil der Durchmesser des Loches mit zunehmendem Verschleißzustand größer wird. Bei der Verwendung von Druckluft kann über den Druckverlust festgestellt werden, wie weit der Verschleiß fortgeschritten ist.

Die DE 10 2009 047 757 B4 offenbart, dass es bei Kohleschleifstücken möglich ist, das Ansprechen einer Sensorvorrichtung bei Beschädigung des Kohleschleifstückes dadurch zu verbessern, dass in einer Längsausnehmung einer Kohleschleifleiste ein fluiddichtes Rohrprofil angeordnet ist, welches zumindest eine Sollbruchstelle aufweist. Durch die Sollbruchstelle kann bei einer Zug- oder Biegebelastung schneller detektiert werden, ob es zu einer größeren Beschädigung der Schleifleiste kommt.

Der Erfindung liegt die Aufgabe zugrunde, einen Stromabnehmer für ein Schienenfahrzeug aufzuzeigen, bei welchem der Verlust einen Schleifschuhs zuverlässig erkannt und in Folge dessen der fehlende Schleifschuh zeitnah ersetzt werden kann, wobei die Auswertung des Zustandes mit möglichst einfachen Komponenten durchgeführt werden kann und ohne dass zusätzliche Vorsprünge oder Kanten den Bereich des Schwingarms vergrößern, so dass dieser zudem möglichst wenig Bauraum erfordert. Es soll ein Schienenfahrzeug aufgezeigt werden, bei welchem der Verlust eines Schleifschuhs zuverlässig erkannt werden kann, um den Fehler zu beheben und um dadurch andere Schleifschuhe zu schonen.

Diese Aufgabe ist bei einem Stromabnehmer mit den Merkmalen des Patentanspruchs 1 gelöst. Ein geeignetes Schienenfahrzeug ist Gegenstand des Anspruchs 7.

Vorteilhafte Weiterbildungen der Erfindung sind Gegenstand der Unteransprüche.

Der erfindungsgemäße Stromabnehmer für ein Schienenfahrzeug umfasst in bekannter Weise einen Schwingarm und einen an dem Schwingarm befestigten Schleifschuh. Der Schleifschuh bestreicht eine ortsfeste Stromschiene. Zwischen dem Schwingarm und dem Schleifschuh ist eine Sollbruchstelle ausgebildet. Erfindungsgemäß ist vorgesehen, dass sich in der oder benachbart der Sollbruchstelle ein geschlossener Messraum befindet, der bei Zerstörung der Sollbruchstelle geöffnet wird und der mit einem Drucksensor gekoppelt ist, der dazu ausgebildet ist, eine elektrische Ausgangsgröße als Maß für den gemessenen Druck an einen Signalempfänger weiterzugeben.

Im Kontext der Erfindung bedeutet "geschlossener Messraum", dass der Messraum gegenüber der Atmosphäre soweit abgedichtet ist, dass er einen eingestellten Über- oder Unterdruck gegenüber der Atmosphäre hält. Ein "geöffneter Messraum" ist ein Messraum, der im Druckaustausch zur Atmosphäre steht, so dass die Druckänderung gegenüber einem geschlossenen Messraum von dem Drucksensor detektierbar ist.

Der Messraum kann unmittelbar in der Sollbruchstelle angeordnet sein, z.B. in Form einer Kammer oder Bohrung. Die Bohrung kann die gesamte Sollbruchstelle durchsetzen, so dass unabhängig vom Verlauf des Bruches im Bereich der Sollbruchstelle immer sichergestellt ist, dass der Messraum geöffnet wird. Der Messraum kann aber auch im Bereich der Sollbruchstelle, d.h. nicht innerhalb des Werkstoffs der Sollbruchstelle angeordnet sein und diese z.B. überbrücken. Eine Druckleitung, die parallel zur Sollbruchstelle angeordnet ist und zwangsläufig zusammen mit der Sollbruchstelle beschädigt werden würde, ist ein Beispiel für einen geeigneten Messraum.

Damit es nicht zu Fehlalarmen kommt, ist die flexible Leitung besonders geschützt. Sie ist in ein Profil des Schwingarms eingebettet, so dass sie außerhalb eines Gehäuses des Stromabnehmers nicht über das Profil des Schwingarmes vorsteht. Der Begriff "Profil" steht für denjenigen Raum, den der Schwingarm in Fahrtrichtung des Schienenfahrzeuges in der jeweiligen Stellung benötigt. Etwaige Beschädigungen des Schwingarmes resultieren in den ganz überwiegenden Fällen aus der Bewegung des Schienenfahrzeuges in Fahrtrichtung. Daher wird das Profil des Schwingarmes genutzt, um die Leitung dort verdeckt anzuordnen und so zu schützen. Hierzu ist sie in einem Kanal im Schwingarm angeordnet. Der Kanal kann in einer Ober- oder Unterseite des Schwingarmes angeordnet sein und schützt die Leitung von drei Seiten. Zusätzlich kann der Kanal zumindest teilweise bedeckt sein. Dann ist die Leitung allseits geschützt.

In bevorzugter Ausgestaltung ist der Kanal zur Unterseite des Schwingarms im Übergang zum Schleifschuhhalter offen. Hier kann ein Winkelanschluss angeordnet sein, zur Verbindung des Messraumes mit der Leitung. Der Winkelanschluss ist die Schnittstelle zwischen der Leitung, die beim Bruch der Sollbruchstelle nicht ausgetauscht wird, und dem Schleifschuhhalter, der bei Zerstörung ausgetauscht wird. Um das Verbinden der Leitung mit dem Winkelanschluss zu ermöglichen, kann der Kanal in diesem Bereich offen zugänglich sein.

Bevorzugt ist der Schleifschuh an einem Schleifschuhhalter befestigt, an welchem die Sollbruchstelle ausgebildet ist und welcher lösbar mit dem Schwingarm verbunden ist. Der Messraum kann als bevorzugte Bohrung im Schleifschuhhalter ausgeführt sein, wobei sich diese Bohrung bis in den Bereich der Sollbruchstelle erstreckt.

Stromabnehmer werden oftmals pneumatisch betätigt, so dass ein entsprechender Gasdruck einer Druckgasquelle an dem Stromabnehmer zur Verfügung steht. Es handelt sich in der Regel um Druckluft. In dem Messraum ist vorzugsweise ein Überdruck eingestellt, indem der Messraum an die genannte Druckgasquelle angeschlossen ist. Theoretisch ist auch ein Unterdruck möglich. Wenn der Messraum geöffnet wird, also die Sollbruchstelle bricht, ändert sich der Druck in dem Messraum. Die Druckänderung wird über einen Drucksensor detektiert, das Signal gewandelt und dem Signalempfänger zur Auswertung bereitgestellt. Da es im Falle der Sollbruchstelle nur zwei Zustände geben kann, nämlich intakt oder nicht intakt, kann es sich bei dem Drucksensor um einen Druckschalter handeln.

Der Signalempfänger kann eine Anzeigeeinheit sein aber auch eine Speichereinheit, wie z. B. ein Fehlerspeicher. Der Signalempfänger kann auch eine Überwachungseinheit sein, die aktiv prüft, ob sich das Ausgangssignal des Drucksensors ändert. Durch die erfindungsgemäße Ausgestaltung kann frühzeitig erkannt werden, ob eine Sollbruchstelle gebrochen ist. Sobald eine Beschädigung einer Sollbruchstelle erkannt wird, können Reparaturmaßnahmen geplant und eingeleitet werden und in Folge dessen weitere Stromabnehmer vor erhöhter Belastung geschützt werden. Die Erfindung verbessert die Betriebssicherheit, schont im Schadensfall weitere Stromabnehmer des Schienenfahrzeugs und vereinfacht die Lokalisierung eines beschädigten Stromabnehmers.

Der Drucksensor kann unmittelbar in dem Gehäuse des Stromabnehmers angeordnet sein, wo er vor Umwelteinflüssen geschützt ist. Der Weg zum Messraum ist kurz, so dass Fehlerquellen zwischen dem Messraum und der Messstelle, d.h. dem Sensor minimiert werden. Der Drucksensor ist bevorzugt nicht am Schwingarm, sondern an einem feststehenden Teil des Stromabnehmers befestigt. Das schont die Sensorik des Drucksensors. Der Drucksensor ist in diesem Fall über eine flexible Leitung mit dem Messraum verbunden.

Die Erfindung betrifft insbesondere ein Schienenfahrzeug mit einem solchen Stromabnehmer, wobei das Schienenfahrzeug eine Steuereinheit umfasst, die mit dem Drucksensor verbunden ist und mit Mitteln zum regelmäßigen Abfragen der elektrischen Ausgangsgröße sowie Mitteln zum Anzeigen einer Änderung der elektrischen Ausgangsgröße ausgestattet ist. Die elektrische Steuerung des Schienenfahrzeugs kann diese Ausgangsgröße oder eine Änderung der Ausgangsgröße vorzugsweise speichern, insbesondere aber dem Führer des Schienenfahrzeugs in der Fahrerkabine visuell zur Anzeige bringen.

Die Erfindung wird nachfolgend anhand eines in den Zeichnungen dargestellten Ausführungsbeispiels näher erläutert. Es zeigt:
- Figur 1: einen Stromabnehmer für eine dritte Schiene in einer Vorderansicht, d.h. in oder entgegen der Fahrtrichtung;
- Figur 2: den Stromabnehmer der Figur 1 in einer perspektivischen Darstellung;
- Figur 3: einen Schwingarm des Stromabnehmers der Figuren 1 und 2 zusammen mit einem Schleifschuhhalter;
- Figur 4: einen Schnitt durch den Schwingarm und Schleifschuhhalter der Figur 3;
- Figur 5: den Stromabnehmer der Figur 1 in einer weiteren Ansicht, allerdings ohne Abdeckung und
- Figur 6: den Stromabnehmer der Figur 1 in einer Ansicht von unten.

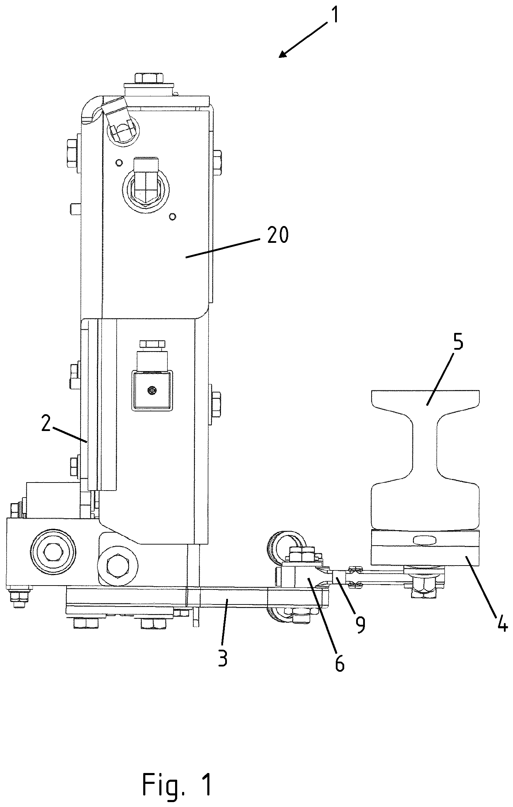

Die Figuren 1 bis 6 zeigen eine einzige Ausführungsform eines Stromabnehmers 1 in unterschiedlichen Ansichten und teilweise im Schnitt.

Der dargestellte Stromabnehmer 1 besitzt einen Grundkörper 2, an welchem ein Schwingarm 3 schwenkbeweglich gelagert ist. Am äußeren Ende des Schwingarms 3 ist ein Schleifschuh 4 befestigt, der von unten an eine Stromschiene 5 anlegbar ist. Das An- und Ablegen des Schleifschuhs 4 erfolgt fernbedient durch ein pneumatisches System, das mit Druckluft betrieben wird. Das An- und Ablegen an die Stromschiene 5 wird zentral von einer Fahrerkabine eines Schienenfahrzeugs aus gesteuert bzw. ausgelöst.

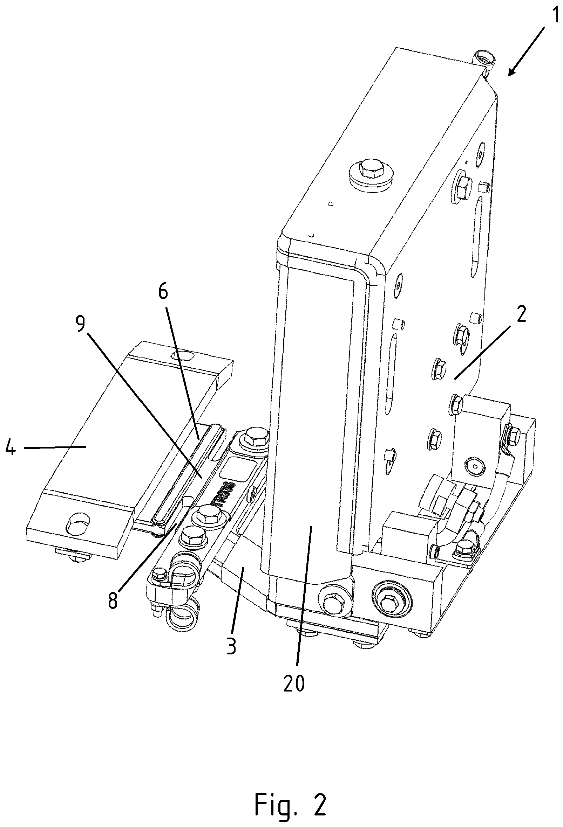

Der Schleifschuh 4 ist über einen Schleifschuhhalter 6 mit dem Schwingarm 3 verbunden. Figur 2 zeigt, dass der Schleifschuhhalter 6 zwei einander gegenüberliegende Einkerbungen 7, 8 besitzt, so dass eine Einschnürung geschaffen wird. Diese Einschnürung ist eine gezielte Schwachstelle, die als Sollbruchstelle 9 dient. Trifft der Schleifschuh 4 während der Fahrt auf ein Hindernis, bricht diese Sollbruchstelle 9 und der Schleifschuh fällt in das Gleisbett, ohne dass der Schwingarm 3 oder gar der ganze Stromabnehmer 1 beschädigt wird. Zur Reparatur ist lediglich der Schleifschuhhalter 6 zu ersetzen und ein neuer Schleifschuh 4 zu montieren.

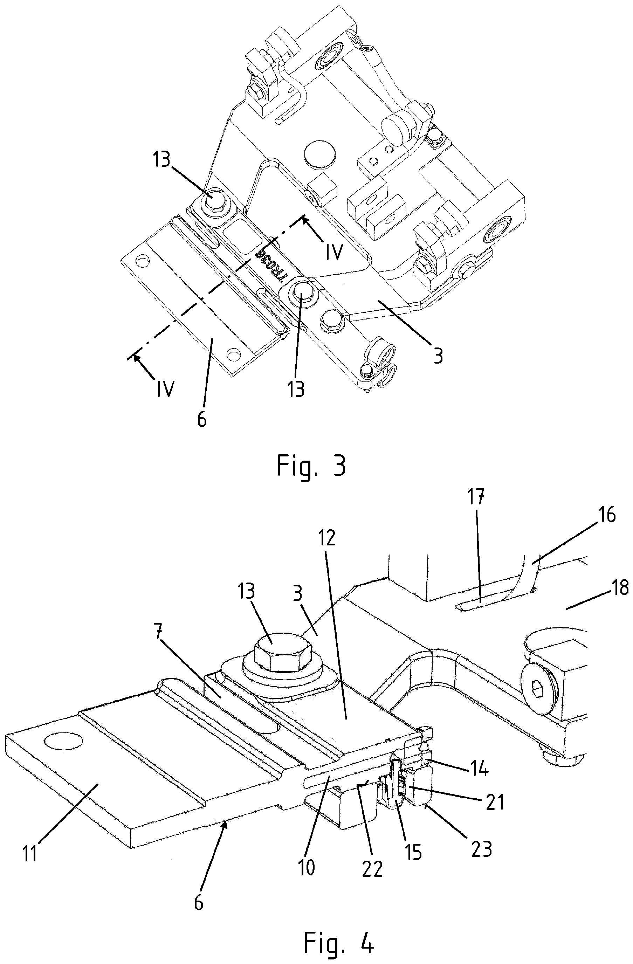

Die Figuren 3 und 4 zeigen den Schleifschuhhalter 6 in einer perspektivischen Ansicht und einer Schnittdarstellung gemäß Schnittlinie IV-IV in Figur 3. Aus der Schnittdarstellung gemäß Figur 4 ist zu erkennen, dass innerhalb der Sollbruchstelle 9 ein Messraum 10 ausgebildet ist. Dieser Messraum 10 ist eine Bohrung, die sich vom Schwingarm 3 in Richtung des hier nicht näher dargestellten Schleifschuhs am Schleifschuhhalter 6 erstreckt. Der Schleifschuhhalter 6 besitzt einen in der Bildebene der Figur 4 links dargestellten Tragabschnitt 11, welcher über die Sollbruchstelle 9 mit einem Befestigungsabschnitt 12 verbunden ist. Auf dem Tragabschnitt wird der austauschbare Schleifschuh befestigt. Der Befestigungsabschnitt 12 liegt auf einer Oberseite 22 auf dem Schwingarm 3 auf und ist über Schrauben 13 (Figur 3) mit dem Schwingarm 3 verschraubt. Figur 4 zeigt, dass sich der als Bohrung ausgeführte Messraum 10 vom Befestigungsabschnitt 12 als Sackbohrung bis in den Tragabschnitt 11 erstreckt und dabei die Sollbruchstelle 9 mittig durchsetzt. Die Tiefe der Bohrung bzw. des Messraums 10 ist so groß bemessen, dass die Sollbruchstelle 9 komplett durchdrungen bzw. überbrückt wird. Auch bei einer nur teilweisen Beschädigung der Sollbruchstelle 9 wird der Messraum 10 geöffnet und tritt in Druckaustausch mit der umgebenden Atmosphäre. Erfindungsgemäß ist vorgesehen, dass der Messraum 9 mit einer Druckgasquelle verbunden ist. Während des Betriebs des Schienenfahrzeugs herrscht ein Überdruck im Messraum 10.

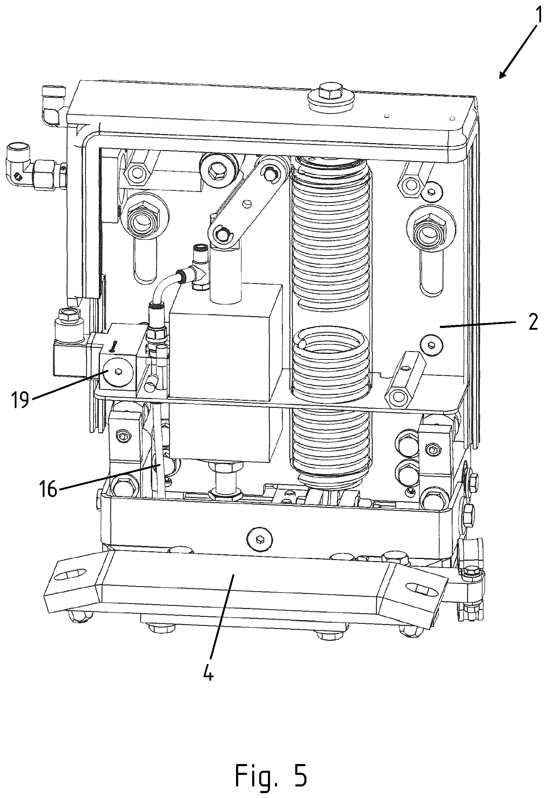

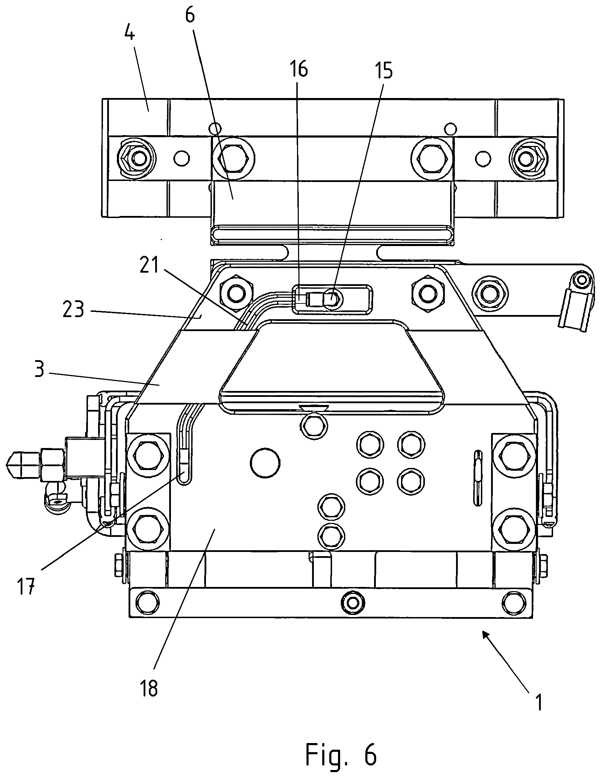

Der Messraum 10 bzw. die Bohrung ist endseitig über einen Stopfen 14 verschlossen. Der Messraum 10 ist über einen Winkelanschluss 15 mit einer Leitung 16 verbunden, die in einem an einer Unterseite 23 des Schwingarms 3 ausgesparten Kanal 21 verläuft. Die Leitung 16 ist dadurch vor Beschädigungen geschützt. Figur 6 zeigt den Stromabnehmer 1 von unten und zeigt den Kanal 21, der zur Aufnahme der Leitung 16 ausgebildet ist. Die Leitung 16 steht nicht nach unten über den Kanal 1 vor. Sie tritt durch eine Öffnung 17 in der Basisplatte 18 des Schwingarmes 3 nach oben in einen von einem Gehäuse 20 umschlossenen Bereich des Stromabnehmers 1 ein. Figur 5 zeigt, wie die Leitung 16 in dem geöffneten Gehäuse 20 des Stromabnehmers 1 nach oben geführt ist. Die Leitung 16 führt zu einem Drucksensor 19, welcher den Druck in der Leitung 16 und damit innerhalb des Messraums 10 in der Sollbruchstelle 9 erfasst. Der Drucksensor 19 ist in diesem Fall als pneumatischer Druckschalter ausgeführt. Er wandelt den Druck als Eingangsgröße in eine elektrische Ausgangsgröße als Maß für den gemessenen Druck und ist dazu ausgebildet, diese Ausgangsgröße an eine Steuereinheit weiterzuleiten. In nicht näher dargestellter Weise kann die elektrische Ausgangsgröße in einer Fahrerkabine des Schienenfahrzeugs angezeigt werden. Darüber hinaus umfasst die Erfindung eine nicht näher dargestellte Steuereinheit, die mit dem Drucksensor 19 verbunden ist und in regelmäßigen Abständen die Ausgangsgröße des Drucksensors 19 abfragt, um auf diese Weise die Sollbruchstelle 9 und damit die Funktionstüchtigkeit des Stromabnehmers 1 zu überprüfen.

### Bezugszeichen:

- 1 -: Stromabnehmer
- 2 -: Grundkörper
- 3 -: Schwingarm
- 4 -: Schleifschuh
- 5 -: Stromschiene
- 6 -: Schleifschuhhalter
- 7 -: Einkerbung
- 8 -: Einkerbung
- 9 -: Sollbruchstelle
- 10 -: Messraum
- 11 -: Tragabschnitt
- 12 -: Befestigungsabschnitt
- 13 -: Schraube
- 14 -: Stopfen
- 15 -: Winkelanschluss
- 16 -: Leitung
- 17 -: Öffnung
- 18 -: Basisplatte
- 19 -: Drucksensor
- 20 -: Gehäuse
- 21 -: Kanal
- 22 -: Oberseite
- 23 -: Unterseite

## Patentansprüche

1. Stromabnehmer für ein Schienenfahrzeug mit einem Schwingarm (3) und mit einem Schleifschuh (4), der an dem Schwingarm (3) befestigt ist, wobei der Schleifschuh (4) dafür vorgesehen ist, eine ortsfeste Stromschiene (5) zu bestreichen, wobei eine Sollbruchstelle (9) des Stromabnehmers (1) zwischen dem Schleifschuh (4) und dem Schwingarm (3) ausgebildet ist, und mit einem geschlossenen Messraum (10), wobei sich der Messraum (10) in der oder benachbart der Sollbruchstelle (9) befindet, wobei der geschlossene Messraum (10) bei Zerstörung der Sollbruchstelle (9) geöffnet wird, und mit einem Drucksensor (19), wobei der geschlossene Messraum (10) mit dem Drucksensor (19) gekoppelt ist, wobei der Drucksensor (19) dazu ausgebildet ist, eine elektrische Ausgangsgröße als Maß für den gemessenen Druck an einen Signalempfänger weiterzugeben, **dadurch gekennzeichnet, dass** der Drucksensor (19) über eine flexible Leitung (16) des Stromabnehmers (1) mit dem Messraum (10) verbunden ist, wobei der Schwingarm (3) ein Profil hat, in das die flexible Leitung (16) eingebettet ist, so dass sie außerhalb eines Gehäuses (20) des Stromabnehmers (1) nicht über das Profil (3) vorsteht, wobei die flexible Leitung (16) in einen Kanal (21) im Schwingarm (3) angeordnet ist und wobei der Kanal (21) zur Unterseite (23) des Schwingarms (3) im Übergang zu einem Schleifschuhhalter (6), über dem der Schleifschuh (4) mit dem Schwingarm (3) verbunden ist, offen ist und wobei in dem Kanal (21) ein Winkelanschluss (15) angeordnet ist zur Verbindung des Messraumes (10) mit der Leitung (16).

2. Stromabnehmer nach Anspruch 1, **dadurch gekennzeichnet, dass** der Kanal (21) zumindest teilweise bedeckt ist.

3. Stromabnehmer nach Anspruch 1 oder 2, **dadurch gekennzeichnet, dass** der Schleifschuh (4) an dem Schleifschuhhalter (6) befestigt ist, an welchem die Sollbruchstelle (9) ausgebildet ist und welcher lösbar mit dem Schwingarm (3) verbunden ist, wobei der Messraum (10) als Bohrung im Schleifschuhhalter (6) ausgeführt ist, die sich in den Bereich der Sollbruchstelle (9) erstreckt.

4. Stromabnehmer nach Anspruch 3, **dadurch gekennzeichnet, dass** der Messraum (10) an eine Druckgasquelle angeschlossen ist und mit Druckgas beaufschlagt ist, wobei der Drucksensor (19) zwischen der Druckgasquelle und dem Messraum (10) angeordnet ist.

5. Stromabnehmer nach einem der Ansprüche 1 bis 4, **dadurch gekennzeichnet, dass** der Drucksensor (19) an einem feststehenden Teil des Stromabnehmer (1) angeordnet ist.

6. Stromabnehmer nach einem der Ansprüche 1 bis 5, **dadurch gekennzeichnet, dass** der Drucksensor (19) vor Umwelteinflüssen geschützt in dem Gehäuse (20) des Stromabnehmers (1) angeordnet ist.

7. Schienenfahrzeug mit einem Stromabnehmer (1) nach einem der vorhergehenden Patentansprüche, mit einer Steuereinheit, die mit dem Drucksensor (19) verbunden ist und mit Mitteln zum regelmäßigen Abfragen der elektrischen Ausgangsgröße.

8. Schienenfahrzeug nach Anspruch 7, **dadurch gekennzeichnet, dass** Mittel zum visuellen Anzeigen der elektrischen Ausgangsgröße des Drucksensors (19) in der Fahrerkabine sind.

## Claims

1. Current collector for a rail vehicle with a swing arm (3) and with a collector shoe (4), which is fastened to the swing arm (3), wherein the collector shoe (4) is provided to cover a stationary busbar (5), wherein a predetermined breaking point (9) of the current collector (1) is formed between the collector shoe (4) and the swing arm (3), and with a closed measuring chamber (10), wherein the measuring chamber (10) is located in the or adjacent to the predetermined breaking point (9), wherein the closed measuring chamber (10) is opened when the predetermined breaking point (9) is destroyed, and with a pressure sensor (19), wherein the closed measuring chamber (10) is coupled with the pressure sensor (19), wherein the pressure sensor (19) is designed to transmit an electrical output variable as a measurement for the measured pressure to a signal receiver, **characterised in that** the pressure sensor (19) is connected via a flexible line (16) of the current collector (1) to the measuring chamber (10), wherein the swing arm (3) has a profile, in which the flexible line (16) is embedded, so that it does not project outside of a housing (20) of the current collector (1) beyond the profile (3), wherein the flexible line (16) is arranged in a channel (21) in the swing arm (3) and wherein the channel (21) is open to the lower side (23) of the swing arm (3) in the transition to a collector shoe holder (6), via which the collector shoe (4) is connected to the swing arm (3) and wherein an angle connection (15) is arranged in the channel (21) for the connection of the measuring chamber (10) to the line (16).

2. Current collector according to claim 1, **characterised in that** the channel (21) is at least partially covered.

3. Current collector according to claim 1 or 2, **characterised in that** the collector shoe (4) is fastened to the collector shoe holder (6), on which the predetermined breaking point (9) is formed and which is detachably connected to the swing arm (3), wherein the measuring chamber (10) is designed as a borehole in the collector shoe holder (6), which extends into the region of the predetermined breaking point (9).

4. Current collector according to claim 3, **characterised in that** the measuring chamber (10) is connected to a compressed gas source and is subjected to compressed gas, wherein the pressure sensor (19) is arranged between the compressed gas source and the measuring chamber (10).

5. Current collector according to any one of claims 1 to 4, **characterised in that** the pressure sensor (19) is arranged on a stationary part of the current collector (1).

6. Current collector according to any one of claims 1 to 5, **characterised in that** the pressure sensor (19) is arranged protected from environmental influences in the housing (20) of the current collector (1).

7. Rail vehicle with a current collector (1) according to any one of the preceding claims, with a control unit, which is connected to the pressure sensor (19) and with means for regular queries of the electrical output variable.

8. Rail vehicle according to claim 7, **characterised in that** means for the visual display of the electrical output variable of the pressure sensor (19) are in the driver's cab.

## Revendications

1. Collecteur de courant pour un véhicule ferroviaire avec un bras oscillant (3) et avec un patin (4) qui est fixé au bras oscillant (3), le patin (4) étant prévu pour frotter contre un rail de courant fixe (5), une zone destinée à la rupture (9) du collecteur de courant (1) étant réalisée entre le patin (4) et le bras oscillant (3), et avec un espace de mesure fermé (10), l'espace de mesure (10) se trouvant dans ou au voisinage de la zone destinée à la rupture (9), l'espace de mesure fermé (10) étant ouvert en cas de destruction de la zone destinée à la rupture (9), et avec un capteur de pression (19), l'espace de mesure fermé (10) étant couplé au capteur de pression (19), le capteur de pression (19) étant réalisé pour retransmettre à un récepteur de signaux une grandeur de sortie électrique en tant que mesure de la pression mesurée,
**caractérisé en ce que** le capteur de pression (19) est relié à l'espace de mesure (10) par l'intermédiaire d'un conducteur souple (16) du collecteur de courant (1),
dans lequel le bras oscillant (3) a un profil dans lequel le conducteur souple (16) est intégré de telle manière qu'il ne dépasse pas du profil (3) en dehors d'un coffret (20) du collecteur de courant (1),
dans lequel le conducteur souple (16) est agencé dans un canal (21) dans le bras oscillant (3)
et dans lequel le canal (21) est ouvert en direction de la face inférieure (23) du bras oscillant (3) dans la transition avec un support de patin (6) par l'intermédiaire duquel le patin (4) est relié au bras oscillant (3)
et dans lequel un raccord angulaire (15) est agencé dans le canal (21) pour relier l'espace de mesure (10) au conducteur (16).

2. Collecteur de courant selon la revendication 1, **caractérisé en ce que** le canal (21) est au moins en partie couvert.

3. Collecteur de courant selon la revendication 1 ou 2, **caractérisé en ce que** le patin (4) est fixé au support de patin (6) au niveau duquel la zone destinée à la rupture (9) est réalisée et qui est relié au bras oscillant (3) de manière amovible, l'espace de mesure (10) étant réalisé sous la forme d'un perçage dans le support de patin (6), perçage qui s'étend dans la zone destinée à la rupture (9).

4. Collecteur de courant selon la revendication 3, **caractérisé en ce que** l'espace de mesure (10) est raccordé à une source de gaz comprimé et est alimenté en gaz comprimé, le capteur de pression (19) étant agencé entre la source de gaz comprimé et l'espace de mesure (10).

5. Collecteur de courant selon l'une quelconque des revendications 1 à 4, **caractérisé en ce que** le capteur de pression (19) est agencé au niveau d'une partie fixe du collecteur de courant (1).

6. Collecteur de courant selon l'une quelconque des revendications 1 à 5, **caractérisé en ce que** le capteur de pression (19) est agencé, protégé des influences de l'environnement, dans le coffret (20) du collecteur de courant (1).

7. Véhicule ferroviaire avec un collecteur de courant (1) selon l'une quelconque des revendications précédentes, avec une unité de commande qui est reliée au capteur de pression (19) et avec des moyens destinés à interroger régulièrement la grandeur de sortie électrique.

8. Véhicule ferroviaire selon la revendication 7, **caractérisé en ce que** des moyens destinés à l'indication visuelle de la grandeur de sortie électrique du capteur de pression (19) sont dans la cabine de conducteur.
